# EUROPEAN PATENT APPLICATION

(11) **EP 4 696 646 A1**
(43) Date of publication of application: **18.02.2026**
(21) Application number: 24194912.2
(22) Date of filing: 16.08.2024
(51) Int. Cl.: C01B 3/22, C01B 32/50

(54) **TRANSFER DEHYDROGENATION OF FORMIC ACID**

(71) Applicant: AKROS Energy GmbH, 18299 Rostock-Laage (DE)
(72) Inventor: MASSA, Jonas, 18299 Rostock-Laage (DE); TURAN, Volkan, 18299 Rostock-Laage (DE); SPONHOLZ, Peter, 18299 Rostock-Laage (DE)
(74) Representative: Hoffmann Eitle

(57) **Abstract**

The present invention relates to a method of releasing hydrogen from formic acid via a transfer molecule. The method comprises the steps of contacting formic acid (I) with an aqueous hydrogen carbonate solution (V) in a first reaction compartment (A) to form carbonic acid and formate; discharging carbon dioxide (II) from the first reaction compartment (A), wherein the carbon dioxide dissociates together with water from the carbonic acid; subsequently converting the formate (III) with water to hydrogen carbonate (V) and hydrogen in a second reaction compartment (B); and discharging hydrogen (IV) from the second reaction compartment (B). The invention further relates to a use of the method to produce purified carbon dioxide and hydrogen as separate gases.

## Description

### TECHNICAL FIELD

The present invention relates to a method of releasing hydrogen from formic acid, in particular from an aqueous solution of formic acid, and the use of the method to produce purified carbon dioxide and hydrogen.

### BACKGROUND ART

Anthropogenic CO₂ emissions are a leading contributor to global warming. One way to reduce the reliance on CO₂-emitting fossil fuels is to transition towards green renewables such as wind and solar energy sources. Unlike the chemical energy storage of fossil fuels or nuclear power, solar and wind can only intermittently provide energy. The energy generated from renewal sources can only be used as electrical or thermal energy when required by using a buffer as an energy storage. A chemical storage system which buffers excesses and deficiencies in energy generated from solar and wind sources is therefore highly desired.

One candidate for chemical energy storage is hydrogen. Hydrogen can be generated from electrolysis of water using surplus electricity provided by wind and solar sources during peak times. The gas can be stored, and the energy can be released on demand, e.g. in a hydrogen fuel cell. However, gaseous hydrogen is unsuitable for storage since it has a very low volumetric energy density and thus relies on liquefaction at -253 °C or compression at up to 700 bar in a high-pressure cylinder for storage. Both processes are highly energy intensive and require extensive safety measures as hydrogen gas is highly flammable.

It is therefore desirable to store the hydrogen chemically in a safe system. One example that is currently being discussed is formic acid (HCOOH). As shown in non-patent literature 1, formic acid can dehydrogenate directly to hydrogen (H₂) and carbon dioxide (CO₂). The system is described by the general reaction formula Eq. 1:

HCOOH → H₂ + CO₂ Eq. 1

Non-patent literature 1: I. Dutta, et al.; Formic Acid to Power towards Low-Carbon Economy; Adv. Energy Mater. ; 2022; 2103799.

### TECHNICAL PROBLEM

The production of gaseous carbon dioxide along with the release of gaseous hydrogen during the dehydrogenation of formic acid is disadvantageous for the further use of hydrogen. At present, separating hydrogen from this gas mixture is a particularly complex process.

Consequently, there is a need for a simple method that allows the separate release of hydrogen and carbon dioxide from formic acid, thus avoiding the need for complex gas separation.

### SUMMARY OF THE INVENTION

It is an object of the present invention to provide a method of releasing hydrogen, separately from carbon dioxide, from formic acid. A particular aspect of the invention is to release the hydrogen via a transfer molecule, namely the salt of formic acid, formate (HCO₂⁻), and thus to generate significant advantages, such as the release of hydrogen from chemical storage with improved efficiency.

According to the first aspect, the present invention relates to a method of releasing hydrogen from formic acid, the method comprising: contacting formic acid with an aqueous hydrogen carbonate (HCO₃⁻) solution in a first reaction compartment to form carbonic acid (H₂CO₃) and formate; discharging carbon dioxide from the first reaction compartment, wherein the carbon dioxide (CO₂) dissociates together with water (H₂O) from the carbonic acid; subsequently converting the formate with water to hydrogen carbonate and hydrogen in a second reaction compartment; and discharging hydrogen from the second reaction compartment.

In a second aspect, the invention relates to a use of the method according to the first aspect to produce purified carbon dioxide and hydrogen as separate gases.

### BRIEF DESCRIPTION OF THE DRAWINGS

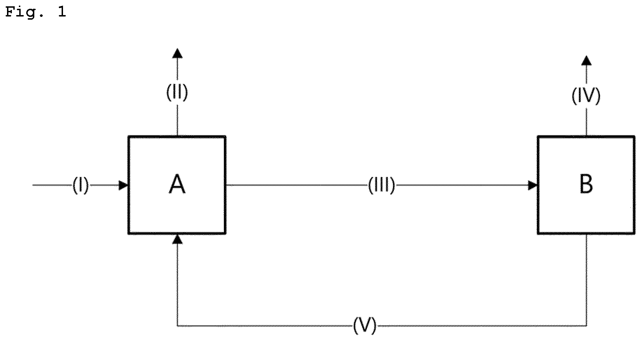

Fig. 1 shows a schematic flow diagram of the method according to the first aspect of the invention.

### DETAILED DESCRIPTION OF THE INVENTION

The method according to the present invention involves customary and common steps. These are, *inter alia,* providing a reaction vessel suitable to carry out the methods; providing the reagents of the reaction system discussed below; providing water as an aqueous medium; setting appropriate temperature, pressure and reaction run times; and separating the products. Although the reactions are reversible and therefore not strictly separable, the position of the equilibrium may be influenced to favour the method of releasing hydrogen in the aqueous reaction system. This may be done in accordance with Le Chatelier's principle as is known and customary in the art. Through such an influence on the position of the equilibrium, the release of hydrogen may be influenced. For instance, by adjusting the composition of the reaction system to contain more formate than hydrogen carbonate and by removing hydrogen gas, at a second place and time, hydrogen release can be favoured.

Where the present description refers to "preferred" embodiments/features, combinations of these preferred embodiments/features shall also be deemed as disclosed as long as this combination is technically meaningful.

Hereinafter, the use of the term "comprising" should be understood as disclosing in a non-limited way, that is to say that additional components or steps can be present or implemented, as long as this is technically meaningful. For a more restricted embodiment, the terms "consisting of" will be used and have to be understood as disclosing in a limited way, that is to say without any additional component or step.

### Method of releasing hydrogen

The method of releasing hydrogen from formic acid according to the present invention comprises the aforementioned steps of: a) contacting formic acid with an aqueous hydrogen carbonate solution in a first reaction compartment to form carbonic acid and formate; b) discharging carbon dioxide from the first reaction compartment, wherein the carbon dioxide dissociates together with water from the carbonic acid; c) subsequently converting the formate with water to hydrogen carbonate and hydrogen in a second reaction compartment; and d) discharging hydrogen from the second reaction compartment.

The reagent "formic acid" of the reaction system discussed below, is the trivial name of "methanoic acid". The anion of this acid is "formate". The reagent "hydrogen carbonate" is an anion that is also known by its trivial name "bicarbonate". Both terms may be used interchangeably in the following. Another reagent of the present reaction system is "carbonic acid". In the presence of water, this acid dissociates rapidly into water and carbon dioxide due to thermodynamic equilibrium.

### Step a)

In step a) formate (HCO₂⁻) is generated together with carbonic acid (H₂CO₃) as a transfer molecule, by contacting formic acid (HCOOH) with an aqueous hydrogen carbonate (HCO₃⁻) solution. This step a) can be described according to the following reaction formula Eq. 2:

HCOOH + HCO₃⁻ → H₂CO₃ + HCO₂⁻ Eq. 2

The term "contacting" as used herein, includes setting appropriate temperature, pressure and reaction run times. For example, the temperature may be set to 30-90 °C, and the pressure to 0-10 bar. Increasing the reaction temperature and/or reducing the pressure generally shifts the equilibrium in step a) (see formula Eq. 2) to the right, so that the conversion rate can be adjusted as required. The reaction times are dependent on a number of parameters and are adjusted accordingly. In an embodiment of the invention, the formic acid is converted proportionally in the first reaction compartment in view of the reaction equilibrium according to Le Chatelier's principle. The hydrogen carbonate solution can be mixed with the formic acid, for example using a static mixer or a stirred tank.

The aqueous reaction system of step a) comprises formic acid, hydrogen carbonate salts, carbonic acid and formate salts dissolved in water. There may also be traces of entrained impurities such as carbonate (CO₃²⁻) in the system. The term "traces" as used herein refers to an amount of 20wt% or less, preferably 10 wt% or less and more preferably 5 wt% or less. As the amount of these impurities is insignificant, they are neglected in the following considerations. Typically, the reaction system substantially consists of formic acid, hydrogen carbonate salts, carbonic acid and formate salts dissolved in water. The reaction system has thus the components formate salt (A₁HCO₂), hydrogen carbonate salts (A₂HCO₃), formic acid (HCOOH) and carbonic acid (H₂CO₃), wherein A₁ and A₂ are counterions, dissolved in water. Preferably, the reaction system comprises at least 75 wt% of the components A₁HCO₂, A₂HCO₃, HCOOH and H₂CO₃, more preferably at least 80 wt%, more preferably at least 90 wt%, more preferably at least 95 wt%, more preferably at least 99 wt%, and even more preferably at least 99.9 wt%. The above mentioned wt% are relative to the total dry weight of the reaction system.

Step a) of the method is performed in a first reaction compartment. The term "first reaction compartment" as used herein refers to a reaction vessel, e.g. a reactor, suitable to carrying out the reaction according to Eq. 2, including the above-described reaction conditions upon "contacting". The first reaction compartment can be defined as a vessel that is either physically or time-wise separate from the second reaction compartment described below. In other words, the first reaction compartment can be a reaction vessel present alongside the second reaction compartment, i.e. two physically separated vessels that are connected for example by a transfer line. Or the first reaction compartment is the same vessel as the second reaction compartment, wherein the reaction conditions are adjusted accordingly.

As shown in the flow diagram of Fig. 1, in a preferred embodiment of the invention, the method comprises an additional step of supplying (I) the first reaction compartment (A) with formic acid prior to step a). Supplying formic acid to the first reaction compartment may be performed by appropriate means, for example, by providing the first reaction compartment with an inlet such as a valve and/or a supplying line.

According to a more preferred embodiment, the present method is suitable for supplying formic acid as an aqueous solution. The additional water added to the reaction system may be removed by means of a separation process as described in further detail below.

### Step b)

As mentioned above, the carbonic acid (H₂CO₃) formed in the aqueous reaction system of step a) dissociates rapidly into water (H₂O) and carbon dioxide (CO₂) gas. The dissociation can be described according to the following reaction formula Eq. 3:

H₂CO₃ → H₂O + CO₂ Eq. 3

While dissociation of carbonic acid occurs by itself due to the thermodynamic equilibrium, the reaction according to Eq. 3 may be accelerated by adjusting the reaction conditions accordingly. For example, the first reaction compartment can be heated externally to a temperature of 30-90 °C, preferably 60 °C, or by reducing the pressure to 0-10 bar, preferably 2 bar in order to accelerate the outgassing of the carbon dioxide.

In step b) of the present method, the carbon dioxide gas formed according to Eq. 3 is discharged (II) from the first reaction compartment (A) as shown in Fig. 1. By removing carbon dioxide gas from the first reaction compartment, the reaction equilibrium in step a) (see formula Eq. 2) is shifted to the right. In other words, the reaction of formic acid with hydrogen carbonate is further promoted to form more formate and carbonic acid, which dissociates.

Discharging carbon dioxide gas from the first reaction compartment may be performed by appropriate means, for example, by providing the first reaction compartment with an outlet such as a valve and/or a discharging line. In a preferred embodiment, the first reaction compartment is further provided with a condenser, where heating in the reaction compartment vaporises part of the aqueous phase. The condenser further purifies the gaseous phase by liquefying water.

### Step c)

In step c) of the method according to the invention, the formate (HCO₂⁻) obtained in step a) is converted with water (H₂O) as reactant to hydrogen carbonate (HCO₃⁻) and hydrogen (H₂) gas. Step c) can be described according to the following reaction formula Eq. 4:

HCO₂⁻ + H₂O → HCO₃⁻ + H₂ Eq. 4

The aqueous reaction system of step c) comprises formate salts and hydrogen carbonate salts dissolved in water. There may also be traces of entrained impurities such as carbonate (CO₃²⁻) in the system. The term "traces" as used herein refers to an amount of 20wt% or less, preferably 10 wt% or less and more preferably 5 wt% or less. As the amount of these impurities is insignificant, they are neglected in the following considerations. Typically, the reaction system substantially consists of formate salts and hydrogen carbonate salts dissolved in water. The reaction system has thus the components formate salt (A₁HCO₂) and hydrogen carbonate salts (A₂HCO₃), wherein A₁ and A₂ are counterions, dissolved in water. Preferably, the reaction system comprises at least 75 wt% of the components A₁HCO₂ and A₂HCO₃, more preferably at least 80 wt%, more preferably at least 90 wt%, more preferably at least 95 wt%, more preferably at least 99 wt%, and even more preferably at least 99.9 wt%. The above mentioned wt% are relative to the total dry weight of the reaction system.

The method of releasing hydrogen in step c) according to Eq. 4 may be carried out in a batch process or in continuous flow.

In one embodiment, the dehydrogenation of formate is carried out by means of a hydrogen-release reaction in a batch process. Such a reaction may be carried out between 20-100 °C, preferably 30-90 °C, preferably 40-80°C, preferably 50-70 °C, and even more preferably 55-65 °C. The above embodiments are preferably carried out at atmospheric pressure. The dehydrogenation may be carried out at a pressure of up to 3 bar.

In another embodiment, the dehydrogenation of formate is carried out by means of a hydrogen-release reaction in a flow process. Such a reaction may be carried out between 20-100 °C, preferably 30-90 °C, preferably 40-80°C, preferably 50-70 °C, and even more preferably 55-65 °C. Alternatively, such a reaction may be carried out between 10-100 °C, more preferably 25-90 °C, and even more preferably 50-70 °C. The dehydrogenation may be carried out at a pressure of up to 3 bar. In one embodiment, the flow process is configured through a flow reactor having a catalyst bed, the catalyst being discussed in more detail below.

Increasing the reaction temperature and/or reducing the pressure generally shifts the equilibrium in step c) (see formula Eq. 4) to the right, so that the conversion rate can be adjusted as required. The reaction times are dependent on a number of parameters and are adjusted accordingly. In an embodiment of the invention, the formate is converted proportionally in the second reaction compartment in view of the reaction equilibrium according to Le Chatelier's principle.

Step c) is performed in a second reaction compartment after discharging carbon dioxide gas from the first reaction compartment. The term "second reaction compartment" as used herein refers to a reaction vessel, e.g. a reactor, suitable to carrying out the reaction according to Eq. 4 including the above-described reaction conditions. In line with above definition of the first reaction compartment, the second reaction compartment can be defined as a vessel that is either physically or time-wise separate from the above-described first reaction compartment. In other words, the second reaction compartment can be a reaction vessel present alongside the first reaction compartment, i.e. two physically separated vessels that are connected for example by a transfer line. Or the second reaction compartment is the same vessel as the first reaction compartment, wherein the reaction conditions are adjusted accordingly.

In a preferred embodiment (cf. Fig. 1), the present method comprises an additional step prior to step c) of supplying (III) the second reaction compartment (B) with an aqueous solution of the formate (HCO₂⁻) from the first reaction compartment (A). The first and second reaction compartments (A/B) are physically separated in this preferred embodiment. Supplying the aqueous formate solution from the first to the second reaction compartment may be performed by appropriate means, for example, by a transfer line. Whilst the reaction compartment can be heated to the above temperatures in order to provide the reaction heat, in this preferred embodiment the reaction solution can be preheated before entering the reaction compartment.

### Step d)

In step d), hydrogen (H₂) gas is discharged (IV) from the second reaction compartment (B) as shown in the flow diagram of Fig. 1.

Discharging hydrogen gas from the second reaction compartment may be performed by appropriate means, for example, by providing the second reaction compartment with an outlet such as a valve and/or a discharging line. In a preferred embodiment, the second reaction compartment is further provided with a condenser, where heating in the reaction compartment vaporises part of the aqueous phase. The condenser further purifies the gaseous phase by liquefying water.

In a preferred embodiment, hydrogen carbonate, preferably an aqueous hydrogen carbonate solution, is removed separately from the hydrogen from the second reactor. For example, a gas outlet may be provided at an upper part of the second reaction compartment and a liquid outlet may be provided at a lower part of the second reaction compartment.

### Step e)

In a more preferred embodiment, the method of the invention comprises an additional step e) of supplying (V) the first reaction compartment (A) with the aqueous hydrogen carbonate (HCO₃⁻) solution from the second reaction compartment (B) to generate a cycle as shown in Fig. 1. This cyclisation allows to reuse the aqueous hydrogen carbonate solution.

The first and second reaction compartments are physically separated in this preferred embodiment. Supplying the hydrogen carbonate from the second to the first reaction compartment may be performed by appropriate means, for example, by a transfer line.

### Water Removal Step

In a preferred embodiment, the method comprises an additional step of removing water from the salt solutions by means of a separation process, preferably by a membrane module.

More preferably, water is removed subsequently to step b), subsequently to step d) or subsequently to steps b) and c). Thus, the means of a separation process for removing water, preferably the membrane module, can be provided at the first reaction compartment, the second reaction compartment or both.

Removing water allows to maintain the concentration of the aqueous reaction system despite the addition of water to the reaction system, e.g., when supplying (I) an aqueous formic acid solution to the first reaction compartment as described above.

### Counterions

In a preferred embodiment, the hydrogen carbonate (HCO₃⁻) and formate (HCO₂⁻) of the above-described steps of the method according to the invention comprise counterions selected from the group consisting of an alkali metal, an alkaline earth metal, ammonium (NH₄⁺), an amino acid ion or combinations thereof. The term "alkali metal" as used herein includes lithium (Li), sodium (Na), potassium (K) and Rubidium (Rb), the term "alkaline earth metal" as used herein includes beryllium (Be), magnesium (Mg), calcium (Ca) and strontium (Sr), and the term "amino acid ion" includes cations of arginine, histidine, and lysine. Preferably, the counterion is selected from the group consisting of Li⁺-ions, Na⁺-ions, K⁺-ions, (NH₄)⁺-ions, Mg²⁺-ions or Ca²⁺-ions.

In a more preferred embodiment, A₁HCO₂ and A₂HCO₃, as described above comprise the same counterions. Consequently, A₁ and A₂ are the same. Typically, no further counterions are present other than those associated with the conventional impurities of the salts. For instance, in one embodiment A₁ and A₂ being the same comprise at least 95 mol% of the counterions to the hydrogen carbonate and formate in the aqueous reaction system, preferably at least 97 mol%, and even more preferably at least 99 mol%. In a particularly preferred embodiment, the counterions are K⁺-ions, meaning that A₁ and A₂ are all K⁺. It is believed that when A₁ and A₂ are all K⁺, the efficiency of hydrogen-release reaction is particularly high.

In a preferred embodiment, the sum of the concentrations of hydrogen carbonate and formate is between 1 M and 15 M, preferably between 2 M and 10 M, and even more preferably between 4 M and 6 M.

### Catalyst

In a preferred embodiment of the invention, step c) takes place in the presence of a catalyst to dehydrogenate formate. The addition of a catalyst may increase the reaction rate in the dehydrogenation. Typically, the catalyst is configured to dehydrogenate formate in a manner consistent with the chemical equations given above.

The catalyst may not be particularly limited. The catalyst is preferably a heterogeneous catalyst. Exemplary catalysts include Pd-based catalysts, such as Pd₄S, Pd, Pd-Au, Pd@Ag, Pd-Cu₂O, PdS, Pd/C, Pd/Al₂O₃, Pd/TiO₂, preferably the catalyst is a Pd/C catalyst or a Pd/TiO₂-based catalyst.

The Pd/TiO₂-based catalyst is preferably a Pd/TiO₂-based catalyst obtainable by a deposition precipitation method, comprising the steps of: providing a porous support material having a BET surface area of at least 150 m²/g when measured with nitrogen at 77 K, wherein the porous support material is TiO₂-based support material; performing a deposition precipitation of Pd on the porous TiO₂-based support material to obtain a Pd/TiO₂-based catalyst precursor; and washing, drying, and activating the Pd/TiO₂-based catalyst precursor to obtain the Pd/TiO₂-based catalyst.

The term "Pd/TiO₂-based catalyst" describes a catalyst substantially comprising palladium on TiO₂. In one embodiment, the term describes a catalyst substantially consisting of Pd on TiO₂. The palladium is deposited on TiO₂ by means of a deposition precipitation method as further described below. The term "TiO₂" refers to a material that is substantially TiO₂ but may comprise oxygen defects and/or may be partially reduced as is common in the art. The material may therefore also be referred to as TiOₓ wherein 1.90 < X ≤ 2, preferably X = 1.96.

The Pd/TiO₂-based catalyst is obtainable by a deposition precipitation method comprising the steps listed above. The steps are discussed in more detail below.

The first step involves providing a porous support material having a BET surface area of at least 150 m²/g when measured with nitrogen at 77 K. The support material (which may also be referred to as "the porous support material") is TiO₂-based support material. This step may be realised by direct synthesis of a porous support material which is based on TiO₂ or by obtaining a commercially available support material which is based on TiO₂. TiO₂-based support material substantially comprises TiO₂, within the common stoichiometric bounds discussed above. In one embodiment, TiO₂-based support material comprises at least 70 wt% TiO₂, wherein the remaining wt% make up modifications as discussed below and/or impurities. In other embodiments, TiO₂-based support material comprises at least 80 wt% TiO₂, at least 90 wt%, at least 95 wt%, or at least 99 wt%.

The second step involves performing a deposition precipitation of Pd on the porous support material to obtain a Pd/TiO₂-based catalyst precursor. The term "deposition precipitation" has its customary meaning as used in the art and refers to the precipitation of a metal precursor on a suspended support material. The term "Pd" in the specific context of "performing a deposition precipitation of Pd" is not particularly limited and does not only refer to elemental Pd. Rather, it refers to typical Pd-containing precursors such as Pd salts and/or colloidal Pd suspensions.

The third step involves washing, drying, and activating the Pd/TiO₂-based catalyst precursor to obtain the Pd/TiO₂-based catalyst. The washing method is not particularly limited and may include any washing methods typically used in the art. In one embodiment, washing comprises rinsing the precursor with deionised water to discharge impurities. The drying method is not particularly limited and may include any drying methods typically used in the art. These may include drying at room temperature and pressure or under reduced pressure and/or at elevated temperature. In all the aforementioned methods, a desiccant substance such as silica gel may be kept in close contact to the precursor. Activating the precursor to yield the catalyst refers to the reduction of adsorbed Pd-ions to elemental Pd and/or more generally, the conversion of oxidised Pd species in the catalyst precursor to elemental Pd. The activating method is not particularly limited and may include any activating method typically used in the art. Typically, such an activating method comprises reduction in the presence of hydrogen gas. In a preferred embodiment, activating is carried out at elevated temperatures under hydrogen flow and in the presence of an inert carrier gas, such as nitrogen, argon and/or helium.

Following the third step, the obtained Pd/TiO₂-based catalyst is typically hermetically sealed and stored under an inert atmosphere for storage. Nitrogen, argon and/or helium gas may be used for this purpose.

The present inventors have unexpectedly found that a Pd/TiO₂-based catalyst obtained by the above method comprises particularly small and highly dispersed Pd clusters. Such small clusters lead to a particularly high catalytic activity in the dehydrogenation of formate. It is believed that the small cluster size and high dispersion is related to the relatively high surface area of the provided porous support material. Notably, the specific surface areas of the support materials based on TiO₂ known in the art are lower with only ca. 100 m²/g (cf. Mori et al (JACS, 2018, 140, 8902-8909, ACS publications) and Zhang et al (Journal of Catalysis, 405, 2022, 152-163, Elsevier)). The obtained Pd/TiO₂-based catalysts comprise Pd clusters of < 1 nm. Conversely, Pd/TiO₂-based catalysts prepared from TiO₂-based substrate materials with a lower surface area are larger and less dispersed, leading to a lower catalytic activity.

In a preferred embodiment, the Pd-loading in the Pd/TiO₂-based catalyst is 0.5-1.5 wt%, based on the total mass of the Pd/TiO₂-based catalyst, preferably 0.8-1.2 wt%, wherein the Pd-loading is determined by inductively coupled plasma optical emission spectroscopy (ICP-OES). The Pd-loading amount can be controlled by adjusting the concentration of the Pd precursor during the deposition precipitation. As is known in the art, the nominal Pd loading and the Pd loading determined by ICP-OES may differ slightly from one another.

In a preferred embodiment, the deposition precipitation is performed in an aqueous solution using at least one Pd-salt. In one embodiment, this is carried out at room temperature, whereas in other embodiments this may be performed at elevated temperatures, e.g. at at least 40 °C, at least 50 °C, or at least 60 °C. The Pd-salt may not be particularly limited. The deposition precipitation may be carried out for at least 1 hr, preferably at least 5 hrs, and even more preferably overnight. Following the deposition precipitation, the water may be removed *in vacuo* and the composition may be dried in an oven, optionally at elevated temperature and reduced pressure. Alternatively, the catalyst precursors may be collected using a filter, such as a micron filter and/or a dialysis membrane.

In a preferred embodiment, the at least one Pd-salt comprises Pd(NO₃)₂·2H₂O, Pd(CH₃COO)₂ or PdCl₂. Preferably, the at least one Pd-salt comprises Pd(NO₃)₂·2H₂O. In a particularly preferred embodiment, at least one Pd-salt is Pd(NO₃)₂·2H₂O. It has been found that Pd(NO₃)₂·2H₂O as a Pd-salt/metal precursor yields the Pd/TiO₂-based catalyst according to the present invention with particularly high catalytic activity in the dehydrogenation of formate.

In a preferred embodiment, the TiO₂-based support material based on TiO₂ has a BET surface area of at least 200 m²/g when measured with nitrogen at 77 K, preferably at least 225 m²/g. It has been found that support materials based on TiO₂ with high BET surface areas yield particularly small and dispersed Pd-clusters and highly catalytically active Pd/TiO₂-based catalysts.

In a preferred embodiment, the Pd/TiO₂-based catalyst is particulate. Preferably, the particle size is at most 100 nm, preferably at most 80 nm, preferably at most 60 nm, preferably at most 40 nm, preferably at most 20 nm, preferably at most 15, and most preferably at most 10 nm. The particle sizes mentioned above are average particle sizes determined from TEM analysis. To add statistic weight to the analysis, at least 100 particles are measured.

In a preferred embodiment, the support material is a CeO₂-modified TiO₂-based support material. A "CeO₂-modified TiO₂-based support material" is a TiO₂-based support material comprising a CeO₂-modification. The method of CeO₂-modification is not particularly limited, and any method practised in the art may be used. It has been found that Pd/TiO₂-based catalysts based on a CeO₂-modified TiO₂-based support material are particularly catalytically active. It is believed that CeO₂ is a more reducible support having a higher affinity for the formation of surface oxygen defects. This is believed to have a stabilising effect on the Pd metal clusters, a metal-oxide mediated charge transfer effect, and further adsorption sites.

In a preferred embodiment, the CeO₂-modified TiO₂-based support material comprises at least 25wt% CeO₂, and preferably at most 30 wt% CeO₂, wherein the wt% is the amount of Ce determined by ICP-OES relative to the total amount of the Pd/TiO₂-based catalyst. In a particularly preferred embodiment, the CeO₂-modified TiO₂-based support material comprises 30 wt% CeO₂. It is observed that at this wt%, the catalytic activity of the catalyst is optimised. The remaining wt% of all embodiments discussed in this paragraph are preferably TiO₂.

In a preferred embodiment, the CeO₂-modified TiO₂-based support material is prepared by a deposition precipitation of CeO₂ on porous TiO₂ having a BET surface area of at least 150 m²/g when measured with nitrogen at 77 K, followed by calcination step. The deposition precipitation of CeO₂ on porous TiO₂ is not particularly limited and any method typically used in the art may be used. In one embodiment, a Ce-salt is dissolved in water and the porous TiO₂ is added. In one embodiment, this is carried out at room temperature, whereas in other embodiments this may be elevated temperatures, e.g. at at least 40 °C, at least 50 °C, or at least 60 °C. The Ce-salt is not particularly limited. In one embodiment, the Ce-salt is any of CeCl₃, Ce₂(SO₄)₃, Ce(OH)₄, Ce₂(CO₃)₃, and Ce(NO₃)₃·6H₂O. In a preferred embodiment, the Ce-salt is Ce(NO₃)₃·6H₂O. The deposition precipitation may be carried out for at least 1 hr, preferably at least 5 hrs, and even more preferably overnight, i.e., for 12 hrs. Following the deposition precipitation, the water may be removed *in vacuo* and the composition may be dried in an oven, optionally at elevated temperature and reduced pressure. The calcination step is not particularly limited and may include any method typically practised in the art. In one embodiment, calcination comprises heating the substrate in air. In one embodiment, calcination comprises heating the substrate in air to at least 200 °C, preferably at least 300°C and even more preferably at least 390 °C.

The form of the catalyst may not be particularly limited. In one embodiment, the catalyst is provided in powder or a shaped body form.

The shaped body may comprise the Pd/TiO₂-based catalyst and graphitic carbon as a binder and is obtained by pressing with a pressure of at least 1 ton/cm². The shaped body thus obtained may have a mass of (around) 10-50 mg, for example 15-40 mg, or 18-32 mg, such as 20 mg or 30 mg, preferably 20 mg. It is preferable that, after pressing, the shaped body is a cylinder like pellet, preferably with dimensions of (around) 2 mm in height and (around) 2 mm in diameter. In other words, the shaped body in a preferred embodiment may be obtained by pressing a total amount of (around) 20 mg of a mixture of Pd/TiO₂-based catalyst and graphitic carbon as a binder with a pressure of at least 1 ton/cm2 into a shape of a cylinder like pellet with dimensions of (around) 2 mm in height and (around) 2 mm in diameter. For example, 20 grams of the mixture of Pd/TiO2-based catalyst and graphitic carbon may be provided and a total of 1000 shaped bodies may be formed therefrom (either at the same time or subsequently) by pressing with a pressure of at least 1 ton/cm². However, the present disclosure is not limited to a mixture with a mass of 20 grams. It is also possible to provide, for example 100g or 1000g of the mixture for forming the shaped bodies therefrom (e.g., with the above-noted mass of 20 mg per shaped body).

The present inventors have found that a shaped body obtained by pressing with a pressure of at least 1 ton/cm² has an unexpectedly high mechanical stability. This is particularly suitable for a use in an aqueous dehydrogenation of formate discussed in more detail above. In such a system, the catalyst bed is typically subjected to significant mechanical disturbances leading to disintegration of the catalyst and/or contamination of the reactive composition with the catalyst. This problem is overcome by the provision of a mechanically stable and highly active catalyst.

In a preferred embodiment, the shaped body is obtained by pressing with a pressure of at least 1.5 ton/cm², preferably at least 2 ton/cm². In another preferred embodiment, pressure does not exceed 10 ton/cm², preferably it does not exceed 8 ton/cm², and even more preferably it does not exceed 5 ton/cm². In another preferred embodiment, the pressure is 1-10 ton/cm², preferably 1.5-8 ton/cm², and even more preferably 2-5 ton/cm². The above limitations of the pressure are also disclosed without any restrictions on the mass of sample.

In a preferred embodiment, the content of the graphitic carbon in the shaped body is 2-30 wt%, preferably 5-15 wt%, and even more preferably 7.5-12.5 wt%. It has been observed that when the content of graphitic carbon in the shaped body is in the above-disclosed wt% ranges, the catalytic activity of the shaped body in the dehydrogenation of formate is particularly high.

In a preferred embodiment, the shaped body has a compressive strength of (at least) 45 N/mm², more preferably of (at least) 47 N/mm², or even more preferably of (at least) 49 N/mm² or (at least) 50 N/mm². In the present context, compressive strength is defined by the maximum stress that the test specimen can withstand during deformation and/or by the breaking stress at which the test specimen is substantially deformed, i.e., breaks or collapses. It may be determined in a compressive strength test in which a test specimen is placed in a test apparatus and a compressive force is applied to the test specimen by a piston, whereby the dimension of the piston is chosen such that it allows for a full contact of the corresponding surface area of the shaped body with the piston. The force (stress) applied to the test specimen is recorded together with a deformation of the test specimen (displacement of the piston). The maximum stress applied to the test specimen without it breaking and/or the stress right before the test specimen is substantially deformed corresponds to the compressive strength of the test specimen. It has surprisingly been found that shaped bodies comprising the Pd/TiO₂-based catalyst have a relatively high compressive strength. For instance, in one embodiment, shaped bodies comprising a Pd/TiO₂-based catalyst prepared from a TiO₂-based support material having a BET surface area of at least 150 m²/g have a higher compressive strength than Pd/TiO₂-based catalyst prepared from TiO₂-based support materials having a BET surface area of less than 150 m²/g, e.g. 64 m²/g.

### Addition of Carbonate Salt

In another preferred embodiment, step c) further comprises providing a carbonate salt and adding said carbonate salt. The provided and added carbonate salt may be in a solid form, in a dissolved form or in a dispersion. Providing and adding the added salt to the reaction system may also comprise combining and mixing dry salts before dissolving them. Following the addition of the provided carbonate salt to the reaction system, the aqueous reaction system of step c) comprises carbonate salts, hydrogen carbonate salts and formate salts dissolved in water. Typically, the reaction system substantially consists of carbonate salts, hydrogen carbonate salts and formate salts dissolved in water. The reaction system has thus the components formate salt (A₁HCO₂), hydrogen carbonate salts (A₂HCO₃) and optionally carbonate salt (A₃CO₃), wherein A₁, A₂ and A₃ are counterions, dissolved in water. Preferably, the reaction system comprises at least 75 wt% of the components A₁HCO₂, A₂HCO₃, and optionally A₃CO₃, more preferably at least 80 wt%, more preferably at least 90 wt%, more preferably at least 95 wt%, more preferably at least 99 wt%, and even more preferably at least 99.9 wt%. The above mentioned wt% are relative to the total dry weight of the reaction system.

Given that many commercially available catalysts, such as Pd/C are not entirely selective towards dehydrogenation, unwanted side products, such as carbon monoxide (CO) may be formed along hydrogen in above step c). CO can be formed in unwanted side reactions, contaminate the released hydrogen and poison Pt electrodes in hydrogen fuel cells. It has been unexpectedly found that by providing and adding a carbonate salt to the reaction system, the CO concentration in the hydrogen gas released in above step c) is very low. The hydrogen released from such a reaction system is therefore highly pure, uncontaminated and ready for use in a hydrogen fuel cell. An energy and cost-intensive gas purification step is therefore not required.

In a preferred embodiment, the concentration of added carbonate in the reaction system is less than 1 M, preferably less than 0.5 M, even more preferably between 0.2 and 0.4 M, and yet more preferably between 0.28 M and 0.32 M. It has been found that the CO concentration is particularly low if the added carbonate concentration is within the above range. It is also believed that at this concentration, the efficiency of the hydrogen-release reaction is particularly high.

In an alternative preferred embodiment, the carbonate concentration in the aqueous reaction system may be adjusted to between 0.2-0.4 M, and preferably 0.28-0.32 M.

In a preferred embodiment, the provided carbonate salt is Li₂CO₃, Na₂CO₃, K₂CO₃, (NH₄)₂CO₃, MgCO₃ or CaCO₃. Consequently, the A₃ counterions are Li⁺-ions, Na⁺-ions, K⁺-ions, (NH₄)⁺-ions, Mg²⁺-ions or Ca²⁺-ions. Preferably, the provided carbonate salt is K₂CO₃ with A₃ counterions being K⁺-ions.

In a preferred embodiment, A₁HCO₂, A₂HCO₃, and optionally A₃CO₃ as described above comprise the same counterions. Consequently, A₁, A₂ and optionally A₃ are all the same. Typically, no further counterions are present other than those associated with the conventional impurities of the salts. For instance, in one embodiment A₁, A₂ and (where added) A₃ being all the same, comprise at least 95 mol% of the counterions to the carbonate, hydrogen carbonate and formate in the aqueous reaction system, preferably at least 97 mol%, and even more preferably at least 99 mol%. In a particularly preferred embodiment, the counterions are K⁺-ions, meaning that A₁, A₂ and (where added) A₃ are all K⁺. It is believed that when A₁, A₂ and (where added) A₃ are all K⁺, the efficiency of hydrogen-release reaction is particularly high.

In a preferred embodiment, the sum of the concentrations of hydrogen carbonate and formate is between 1 M and 15 M, preferably between 2 M and 10 M, and even more preferably between 4 M and 6 M.

In a preferred embodiment, the ratio of the concentration of carbonate to the sum of the concentrations of hydrogen carbonate and formate in the aqueous reaction system is between 10:1 and 1:1000, preferably between 5:1 and 5:1000, more preferably between 1:1 and 1:100, and even more preferably between 2:100 and 10:100.

If a carbonate salt is added to the second reaction compartment in step c) and the aqueous solution is reused in accordance with the preferred step e) described above, the amount of formic acid added to the first reaction compartment may then be increased in accordance with the amount of carbonate salt added. By this adjustment, all of the added carbonate may be converted first to hydrogen carbonate and then further to carbon dioxide, which may then decompose to carbon dioxide.

### Use of the Method

In a second aspect, the invention relates to a use of the method according to the first aspect to produce purified carbon dioxide and purified hydrogen as separate gases.

By releasing hydrogen via the transfer molecule formate (HCO₂⁻) as described above, the need for complex gas separation is avoided. Therefore, by using the method of the first aspect of the invention to release hydrogen, chemical storage of hydrogen in a safe system can be achieved with improved efficiency.

## Claims

1. A method of releasing hydrogen from formic acid, the method comprising:
a) contacting formic acid (HCOOH) with an aqueous hydrogen carbonate (HCO₃⁻) solution in a first reaction compartment (A) to form carbonic acid (H₂CO₃) and formate (HCO₂⁻);
b) discharging (II) carbon dioxide (CO₂) from the first reaction compartment (A), wherein the carbon dioxide (CO₂) dissociates together with water (H₂O) from the carbonic acid (H₂CO₃);
c) subsequently converting the formate (HCO₂⁻) with water (H₂O) to hydrogen carbonate (HCO₃⁻) and hydrogen (H₂) in a second reaction compartment (B); and
d) discharging (IV) hydrogen (H₂) from the second reaction compartment (B).

2. The method according to claim 1, comprising a step prior to step a) of supplying (I) the first reaction compartment (A) with formic acid (HCOOH); preferably with an aqueous solution of formic acid (HCOOH).

3. The method according to claims 1 or 2, comprising a step prior to step c) of supplying (III) the second reaction compartment (B) with an aqueous solution of the formate (HCO₂⁻) from the first reaction compartment (A).

4. The method according to any of claims 1 to 3, comprising a step e) of supplying (V) the first reaction compartment (A) with the aqueous hydrogen carbonate (HCO₃⁻) solution from the second reaction compartment (B) to generate a cycle.

5. The method according to any of claims 1 to 4, wherein water is removed by means of a separation process.

6. The method according to claim 5, wherein water is removed subsequently to step b) and/or step d), preferably by means of a membrane module.

7. The method according to any of claims 1 to 6, wherein hydrogen carbonate (HCO₃⁻) and formate (HCO₂⁻) comprise the same counterions selected from the group consisting of an alkali metal, an alkaline earth metal, ammonium, an amino acid ion or combinations thereof.

8. The method according to any of claims 1 to 7, wherein step c) takes place in the presence of a catalyst to dehydrogenate formate (HCO₂⁻).

9. The method according to claim 8, wherein the catalyst is a heterogenous catalyst, preferably a Pd-based catalyst, more preferably the catalyst is selected from the group consisting of Pd/C or Pd/TiO₂.

10. The method according to any of claims 1 to 9, wherein step c) further comprises providing a carbonate salt and adding said carbonate salt, preferably the carbonate salt is selected from the group consisting of Li₂CO₃, Na₂CO₃, K₂CO₃, (NH₄)₂CO₃, MgCO₃ or CaCO₃, more preferably the carbonate salt is K₂CO₃.

11. The method according to claim 10, wherein the carbonate salt is added at a concentration of less than 1 M, preferably less than 0.5 M, more preferably between 0.2 and 0.4 M, and most preferably between 0.28 M and 0.32 M.

12. The method according to any of claims 1 to 11,
wherein in step a) the formic acid (HCOOH) is converted proportionally in the first reaction compartment (A); and/or
wherein in step c) the formate (HCO₂⁻) is converted proportionally in the second reaction compartment (B).

13. Use of the method according to any of claims 1 to 12, to produce purified carbon dioxide (CO₂) and hydrogen (H₂) as separate gases.
